# EUROPÄISCHE PATENTANMELDUNG

(11) **EP 3 323 738 A1**
(43) Veröffentlichungstag der Anmeldung: **23.05.2018**
(21) Anmeldenummer: 17001795.8
(22) Anmeldetag: 03.11.2017
(51) Int. Cl.: B65B 19/02, B65B 19/24

(54) **VORRICHTUNG UND VERFAHREN ZUR OPTISCHEN PRÜFUNG VON BEI DER VERPACKUNG VON PRODUKTEN ZU PRÜFENDEN OBJEKTEN**

(30) Priorität: 17.11.2016 DE 102016013719
(71) Anmelder: Focke & Co. (GmbH & Co. KG), 27283 Verden (DE)
(72) Erfinder: Linck, Christian, 27283 Verden (DE)
(74) Vertreter: Aulich, Martin

(57) **Zusammenfassung**

Die Erfindung betrifft eine Vorrichtung zur optischen Prüfung von bei der Verpackung von Produkten zu prüfenden Objekten - Prüfobjekte - während des Verpackungsprozesses, insbesondere von Zigaretten (11) oder anderen rauchbaren Artikeln, bevorzugt als Bestandteil einer Verpackungsmaschine zur Verpackung solcher Produkte in Packungen, mit einem Bilder der Prüfobjekte aufnehmenden elektrooptischen Prüforgan (21), insbesondere einer (elektronischen) Kamera. Die Erfindung ist gekennzeichnet durch eine Bildleiteinrichtung (22), mit der gleichzeitig Bilder oder Teilbilder von mindestens zwei, insbesondere an gegenüberliegenden Enden der Prüfobjekte (10) befindlichen unterschiedlichen Seiten (17a-17f) des jeweiligen Prüfobjekts (10) zu dem Prüforgan (21) geleitet werden, sodass dieses in einem einzigen Bildaufnahmevorgang eine die mindestens zwei Bilder bzw. Teilbilder umfassende Bildaufnahme erzeugen kann.

## Beschreibung

Die vorliegende Erfindung betrifft eine Vorrichtung zur optischen Prüfung von bei der Verpackung von Produkten zu prüfenden Objekten - Prüfobjekte - während des Verpackungsprozesses, bevorzugt von Zigaretten oder anderen rauchbaren Produkten, insbesondere als Teil einer Verpackungsmaschine zur Verpackung solcher Produkte mit einem elektrooptischen Prüforgan, insbesondere einer Kamera, das Bilder der Prüfobjekte aufnehmen kann. Des Weiteren betrifft sie ein Verfahren, mit dem eine solche Vorrichtung betrieben werden kann.

Es existieren diverse Verfahren zur Inline-Prüfung von Zigarettenformationen bzw. Gruppen von Zigaretten aus mehreren übereinander angeordneten Zigarettenlagen. Nachteilig bei diesen ist insbesondere, dass von einem Prüforgan zur selben Zeit in der Regel immer nur eine Seite der Zigarettenformation aufgenommen wird, beispielsweise die Tabakseite oder die Filterseite. Die anderen Seiten müssen regelmäßig von einem weiteren Prüforgan erfasst werden. Dieses Vorgehen ist zeit- und kostenintensiv. Zudem erfordert es viel Bauraum.

Hiervon ausgehend ist es Aufgabe der vorliegenden Erfindung, das eingangs genannte Verfahren und die eingangs genannte Vorrichtung weiterzuentwickeln.

Diese Aufgabe wird gelöst durch eine Vorrichtung mit den Merkmalen des Anspruchs 1 sowie ein Verfahren mit den Merkmalen des Anspruchs 9.

Danach weist eine erfindungsgemäße Vorrichtung eine Bildleiteinrichtung auf, mit der gleichzeitig Bilder oder Teilbilder von mindestens zwei, insbesondere an gegenüberliegenden Enden der Prüfobjekte befindlichen unterschiedlichen Seiten des jeweiligen Prüfobjekts zu dem elektrooptischen Prüforgan geleitet werden, sodass dieses in einem einzigen Bildaufnahmevorgang eine die mindestens zwei Bilder bzw. Teilbilder umfassende Bildaufnahme erzeugen kann.

Durch den Einsatz einer solchen Bildleiteinrichtung ist es möglich, verschiedene Seiten eines Prüfobjekts, insbesondere die verschiedenen Seiten einer Zigarettenformation, gleichzeitig vollständig oder mindestens bereichsweise in einer einzigen, von dem Prüforgan erzeugten Bildaufnahme zu erfassen. Zu diesem Zweck werden die verschiedenen Seiten zur Erzeugung der Bildaufnahme von der Bildleiteinrichtung gleichzeitig auf das Bildaufnahmeelement des Prüforgans projiziert, beispielsweise den CCD-Chip einer Kamera.

Vorzugsweise weist die Bildleiteinrichtung mindestens zwei erste separate Bildleitmittel auf, wobei jeweils ein Bildleitmittel jeweils einer der mindestens zwei in der Bildaufnahme zu integrierenden Prüfobjektseiten zugeordnet ist. Dabei ist jedes dieser ersten Bildleitmittel ein Umlenkmittel, das die Lichtstrahlen innerhalb des jeweiligen Strahlengangs der Lichtstrahlen - ausgehend von der jeweiligen Prüfobjektseite hin zu dem Prüforgan - von einer ersten Raumrichtung in eine zweite, abweichende Raumrichtung umlenkt. Bevorzugt handelt es sich bei diesen ersten Bildleitmitteln jeweils um Spiegel, mit denen die von den Prüfobjektseiten stammenden Lichtstrahlen entsprechend gelenkt werden können.

Dabei kann vorgesehen sein, dass die vorgenannte zweite Raumrichtung bereits mit der Raumrichtung übereinstimmt, in der das Prüforgan angeordnet ist. In diesem Fall würden die mindestens zwei ersten Bildleitmittel die Lichtstrahlen der Bilder/Teilbilder der beiden Prüfobjektseiten jeweils entsprechend direkt bzw. unmittelbar zu dem Prüforgan leiten. Es kann alternativ aber auch vorgesehen sein, ein oder mehrere weitere Bildleitmittel in der zweiten Richtung zu platzieren, die die Lichtstrahlen nochmal umlenken bzw. weiterleiten.

Zweckmäßigerweise weist die Bildleiteinrichtung allgemein jedenfalls mindestens ein (ggf. zweites) Bildleitmittel bzw. Umlenkmittel (insbesondere Spiegel) auf, das aus unterschiedlichen Raumrichtungen stammende Lichtstrahlen des jeweiligen Bildes bzw. Teilbildes der jeweiligen Prüfobjektseiten in eine gemeinsame Raumrichtung weiterleitet bzw. umlenkt, und zwar in Richtung des elektrooptischen Prüforgans.

In weiterer Konkretisierung der Erfindung ist dabei vorgesehen, die Lichtstrahlen der mindestens zwei Prüfobjektseiten zunächst jeweils mit den diesen zugeordneten ersten Bildleitmitteln bzw. Umlenkmitteln in Richtung mindestens eines zweiten Bildleitmittels bzw. Umlenkmittels umzulenken, das dann die Lichtstrahlen zu dem Prüforgan umlenkt bzw. weiterleitet. In diesem Fall sind die beiden ersten Bildleitmittel, die die Lichtstrahlen der Bilder/Teilbilder der Prüfobjektseiten zu dem mindestens einen zweiten Bildleitmittel umlenken, im Strahlengang der Lichtstrahlen - ausgehend von der jeweiligen Prüfobjektseite hin zu dem Prüforgan - vorgeordnet.

Vorzugsweise sind die vorgenannten Bildleitmittel - wie bereits angedeutet - Spiegel bzw. Teil einer Spiegelanordnung mit mehreren Spiegeln, mit denen die Lichtstrahlen der Bilder/Teilbilder der mindestens zwei Prüfprojektseiten entlang eines jeweiligen Strahlengangs, der sich von der jeweiligen Prüfobjektseite bis hin zu dem Prüforgan erstreckt, mehrfach umgelenkt werden, bis sie das Prüforgan erreichen.

Die Prüfobjekte sind vorzugsweise Zigarettengruppen bzw. Zigarettenformationen oder auch Zigarettenpackungen etc. Es kann sich grundsätzlich aber auch um jegliche anderen zu verpackenden Objekte handeln, wie etwa Hygieneartikeln.

Was die konkrete Anordnung des Prüforgans betrifft, so ist es bevorzugt im Bereich einer Förderstrecke eines die Zigarettengruppen fördernden Förderers positioniert, insbesondere eines Förderers einer Verpackungsmaschine zur Herstellung von Zigarettenpackungen bzw. zur Verpackung von Zigaretten. Die Bildleiteinrichtung, insbesondere die Spiegelanordnung mit mehreren Spiegeln, leitet dabei gleichzeitig Bilder/Teilbilder mindestens von zwei, bevorzugt von mindestens vier Seiten der Zigarettengruppe, insbesondere von der Filterseite, der Tabakseite, der Oberseite und/oder der Unterseite der Zigarettengruppe, zu dem elektrooptischen Prüforgan weiter.

Die erfindungsgemäße Vorrichtung kann des Weiteren ein Beleuchtungsorgan umfassen, das das zu prüfende Prüfobjekt beleuchtet, wobei zwischen dem Beleuchtungsorgan und dem zu prüfenden Prüfobjekt ein halbdurchlässiger Spiegel der Spiegelanordnung der Bildleiteinrichtung angeordnet ist, durch den hindurch das Licht des Beleuchtungsorgans auf das Prüfobjekt fällt.

Bevorzugt werden mit der Bildleiteinrichtung die Bilder/Teilbilder der mindestens zwei Prüfobjektseiten derart zu dem elektrooptischen Prüforgan geleitet, dass sich die Bilder/Teilbilder in der Bildaufnahme nicht überschneiden. Die Bildaufnahme kann dann in Bezug auf jede Prüfobjektseite in einfacher Weise mit geeigneten, insbesondere rechner- bzw. computergestützten Bildauswerteverfahren ausgewertet werden.

Weitere Merkmale der vorliegenden Erfindung ergeben sich aus den beigefügten Patentansprüchen, der nachfolgenden Beschreibung eines bevorzugten Ausführungsbeispiels der Erfindung sowie aus den beigefügten Zeichnungen. Darin zeigt:

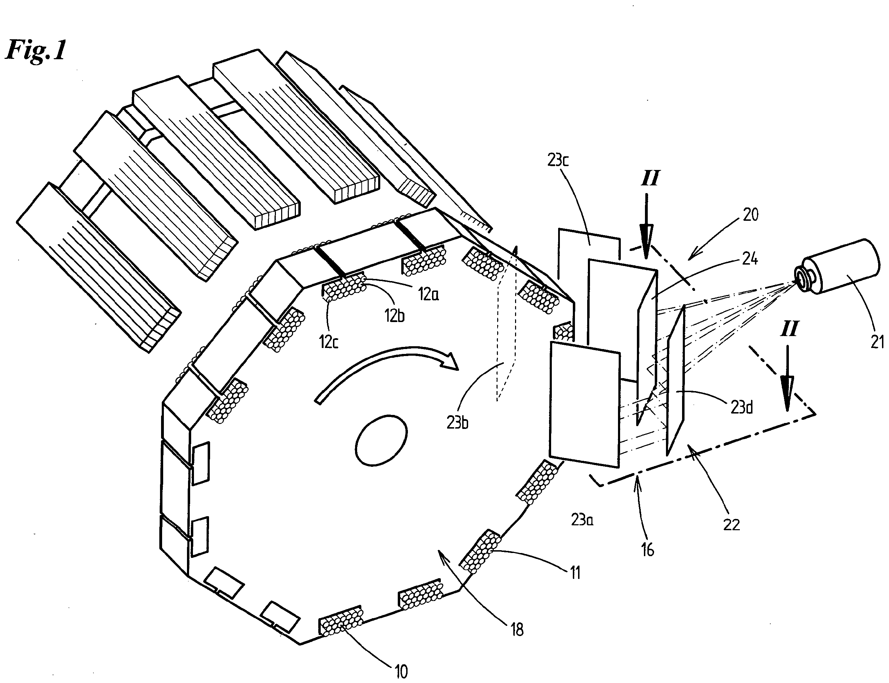

- Fig. 1: eine erfindungsgemäße Prüfvorrichtung mit Kamera sowie Bildleiteinrichtung zur Prüfung von mit einem Zigarettenrevolver transportierten Zigarettengruppen in Schrägansicht,
- Fig. 2: eine Draufsicht auf den strichpunktierten Bereich in Fig. 1 in Blickrichtung II-II,
- Fig. 3: die in die Kameraebene III-III aus Fig. 2 projizierten Bilder/Teilbilder der verschiedenen Seiten einer von der Prüfvorrichtung aktuell untersuchten Zigarettengruppe,
- Fig. 4: eine Prinzipdarstellung verschiedener mit der Prüfvorrichtung detektierbarer Fehler von Zigarettengruppen.

Die Erfindung wird anhand der optischen Prüfung von besonderen Prüfobjekten erläutert, nämlich von Gruppen bzw. Formationen 10 aus Zigaretten 11. Die Erfindung ist aber nicht auf derartige Prüfobjekte beschränkt. Denkbar sind als Prüfobjekte beispielsweise auch fertige oder halbfertige Zigarettenpackungen oder Gebindepackungen. Grundsätzlich aber auch jegliche zu verpackenden Produkte außerhalb des Tabakbereichs.

Die Zigarettengruppen 10 werden in bekannter Weise im Rahmen eines an einer Verpackungsmaschine für Zigaretten ablaufenden übergeordneten Verpackungsprozesses gebildet, in dem Einzelzigaretten 11 entsprechend gruppiert werden. Die Zigarettengruppen 10 bilden den Packungsinhalt der späteren Zigarettenpackungen. Der Ablauf sowohl einer solchen Gruppierung, als auch des gesamten übergeordneten Verpackungsprozesses ist gut bekannt, sodass hierauf nicht näher eingegangen wird. Die erfindungsgemäße optische Prüfung kann an beliebiger geeigneter Stelle in diesem Prozess bzw. an der entsprechenden Verpackungsmaschine erfolgen.

Zigarettengruppen bestehen regelmäßig aus zwei oder mehr übereinander angeordneten (parallelen) Lagen von jeweils in einer Lage nebeneinander angeordneten Zigaretten. Im vorliegenden Fall weist jede Zigarettengruppe 10 drei Lagen auf, nämlich eine obere Lage 12a - Oberlage - , eine mittlere Lage 12b - Mittellage -, sowie eine untere Lage 12c - Unterlage -. Die Zigarettengruppen 10 bilden dabei jeweils einen im Wesentlichen quaderförmigen Zigarettenblock.

Die Zigaretten 11 verfügen jeweils über ein erstes Ende, vorliegend ein Filterende 14, sowie gegenüberliegend über ein zweites Ende, vorliegend ein Tabakende 15. Sowohl Stirnseiten 13a der Filterenden 14 als auch Stirnseiten 13b der Tabakenden 15 spannen in der Gruppe 10 jeweils eine gemeinsame vertikale bzw. aufrechte Ebene auf.

Die Zigarettengruppen 10 werden als Prüfobjekte an einer Prüfstation 16 der Verpackungsmaschine einer optischen bzw. visuellen Prüfung unterzogen. Konkret werden die Seiten der Zigarettengruppen 10 geprüft (Prüfobjektseiten), nämlich vorliegend die Front- bzw. Filterseite 17a und die gegenüberliegende Rück- bzw. Tabakseite 17b, die Oberseite 17c und die gegenüberliegende Unterseite 17d, sowie die sich gegenüberliegenden Schmalseiten 17e und 17f.

Die einzelnen Zigarettengruppen 10 werden zu diesem Zweck zunächst durch einen Förderer 18 der Verpackungsmaschine, hier einen drehend angetriebenen Revolver, zu der Prüfstation 16 gefördert. Derartige drehend rotierbare bzw. angetriebene Förderer sind bekannt. Es versteht sich, dass die Erfindung nicht auf solche Förderer begrenzt ist.

Im Bereich der Prüfstation 16 erfolgt dann die optische Prüfung der Zigarettengruppen 10 auf etwaige Fehler.

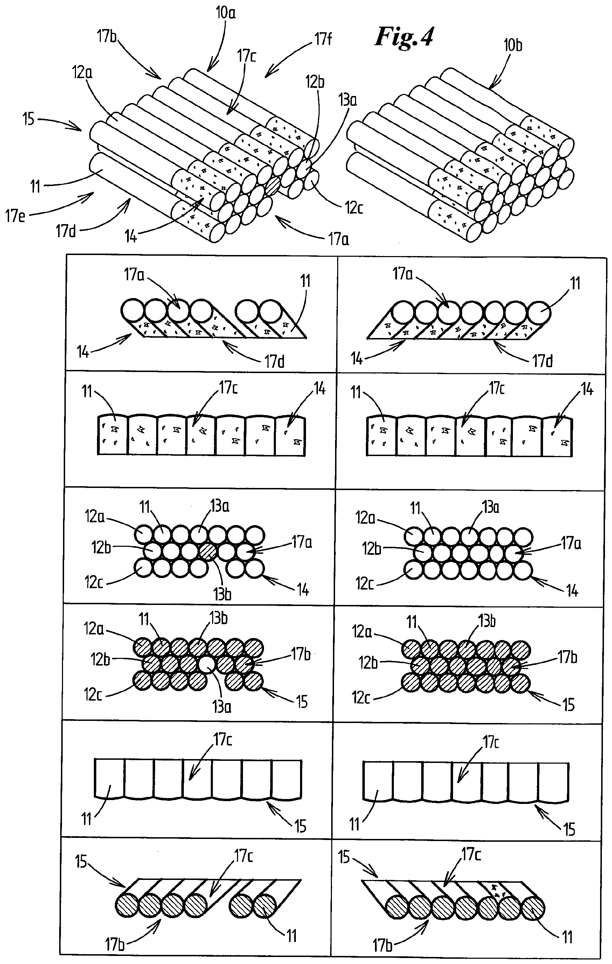

Zigarettengruppen 10 können diverse Fehler aufweisen, vgl. Fig. 4.

So kann beispielsweise in einer der Lagen 12a-12c eine Zigarette 11 fehlen, vgl. Unterlage 12c in der Zigarettengruppe 10a in Fig. 4. Es kann auch eine Zigarette verdreht sein, vgl. die Mittellage 12b der Zigarettengruppe 10a.

Auch kann auf eine der Zigaretten der einzelnen Lagen 12a-12c Schmutz vorhanden sein, vgl. die Unterlage 12c der Zigarettengruppe 10b in Fig. 4.

Die Erfindung eröffnet die Möglichkeit, diese und andere Fehler gleichzeitig und mit (nur) einem elektrooptischen Prüforgan 21 zu erfassen und anschließend (automatisch) zu analysieren. Zu diesem Zweck weist die Prüfstation 16 eine das Prüforgan 21, vorliegend eine Kamera (CCD-Kamera, Lichtfeldkamera etc.), umfassende Prüfvorrichtung 20 auf.

Die Prüfvorrichtung 20 verfügt neben dem Prüforgan 21 über eine Bildleiteinrichtung 22, die unmittelbar benachbart zu der aktuell bzw. als nächstes zu prüfenden Zigarettengruppe 10 positioniert ist.

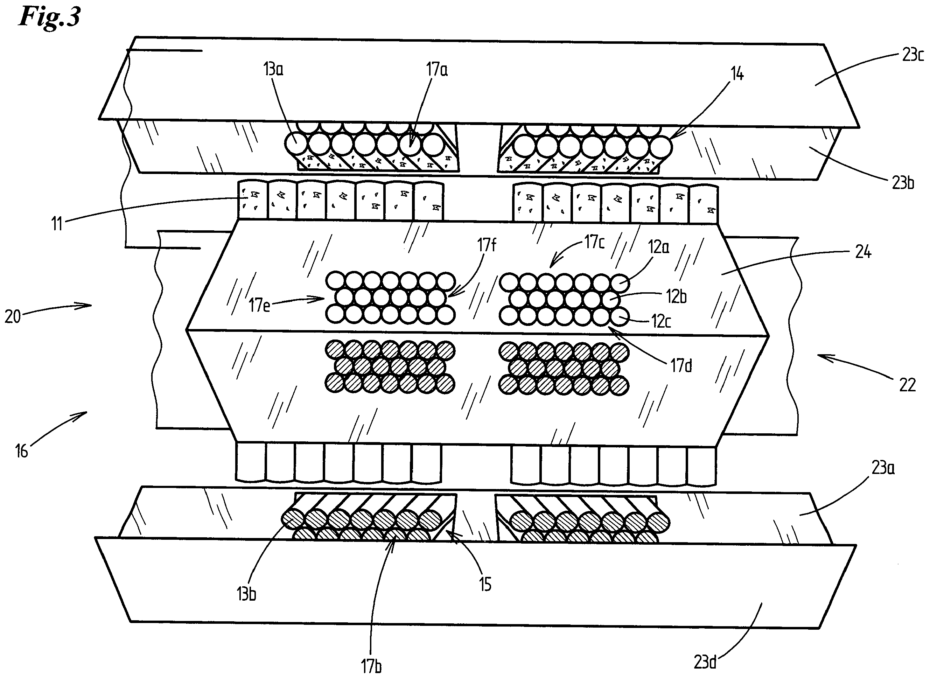

Die Bildleiteinrichtung 22 sorgt dafür, dass Bilder bzw. Teilbilder der einzelnen Prüfobjektseiten bzw. der einzelnen Zigarettengruppenseiten 17a-17f gleichzeitig zu dem Prüforgan 21 geleitet bzw. projiziert werden. In Fig. 3 ist exemplarisch das Bild gezeigt, das das Prüforgan 21 dabei "sieht" bzw. das in die Bildaufnahmeebene (CCD-Chip etc.) desselben projiziert wird. Dieses Bild kann das Prüforgan 21 dann entsprechend in einer einzelnen Bildaufnahme aufnehmen. Die einzelnen Seiten 17a-17f der Zigarettengruppe 10 sind in der Bildaufnahme als separate bzw. räumlich getrennte Bildbestandteile gut erkennbar und als solche analysierbar.

Zur Projektion des Bildes bzw. der Lichtstrahlen des Bildes in Richtung der Bildaufnahmeebene des Prüforgans 21 umfasst die Bildleiteinrichtung 22 einzelne Bildleitelemente 23a-23d sowie 24. Vorliegend handelt es sich bei den Bildleitelementen 23a-23d sowie 24 um Spiegel, die Teil einer entsprechenden Spiegelanordnung sind, mit der der Strahlengang der von den Zigarettengruppenseiten 17a-17f stammenden Lichtstrahlen zu dem Prüforgan 21 hingeleitet werden.

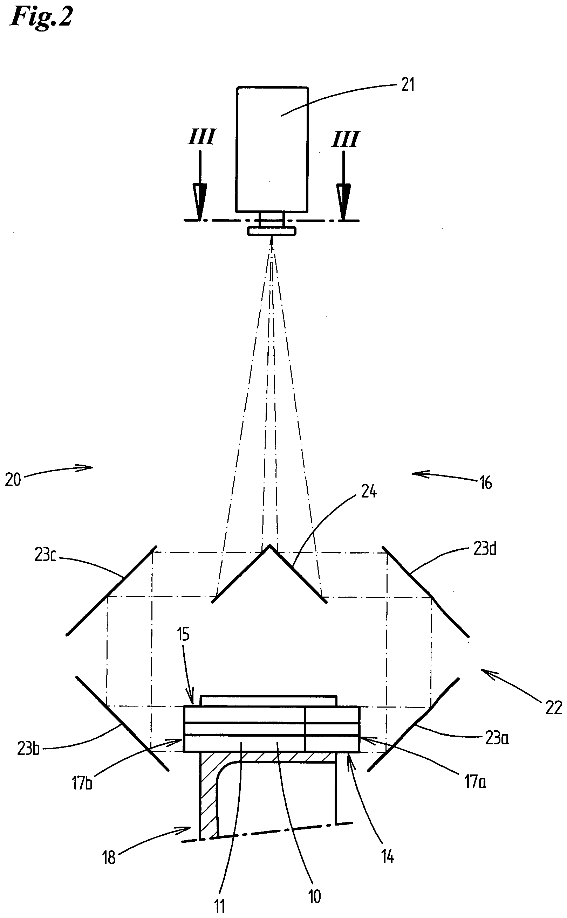

Ausgehend von der jeweils zu prüfenden Zigarettengruppe 10, vgl. Fig. 2, sind im jeweiligen Strahlengang der Lichtstrahlen zunächst zu beiden Seiten der Zigarettengruppe 10, nämlich benachbart zu der Filterseite 17a und der Tabakseite 17b, jeweils ein Spiegel 23a bzw. 23b angeordnet, die die Lichtstrahlen der Zigarettengruppenseiten 17a-17f vollständig oder teilweise zunächst zu den weiteren Spiegeln 23c bzw. 23d leiten. Die Spiegel 23c, 23d leiten die Lichtstrahlen jeweils zu dem Spiegel 24 weiter. Dieser lenkt die entsprechend aus unterschiedlichen Raumrichtungen kommenden Lichtstrahlen dann in eine gemeinsame, abweichende Richtung um, vorliegend unmittelbar in Richtung des Prüforgans 21.

Mit an sich bekannten Bildauswerteverfahren bzw. einer entsprechenden Software kann eine nicht gezeigte Rechen- bzw. Computereinrichtung der Prüfvorrichtung 20 die jeweilige (Prüf-)Bildaufnahme auf die etwaigen Fehler hin analysieren.

Zu diesem Zweck wird das überlagerte Gesamtbild gemäß Fig. 3 aus den Einzelansichten der Bilder/Teilbilder der jeweiligen Prüfobjektseiten 17a-17f sowie aus den Bildern/Teilbildern der Spiegel 23a-23d etc. mittels an sich bekannter Methode entsprechend ausgewertet und analysiert. So könnte unter anderem ein Soll-/Ist-Vergleich mit Referenzbildern von Prüfobjektseiten durchgeführt werden.

Wie der Fachmann erkennt, sind je nach Anforderung diverse andere räumliche Anordnungen von ggf. anders ausgebildeten Spiegeln bzw. Bildleitelementen denkbar. Wichtig ist nur, dass die Bildleiteinrichtung im Ergebnis dafür sorgt, dass mindestens zwei, bevorzugt sämtliche interessierenden Seiten des jeweiligen Prüfobjekts - hier der Zigarettengruppe 10 - gleichzeitig in die Bildaufnahmeebene des eingesetzten Prüforgans projiziert werden (ganz oder teilweise).

**Bezugszeichenliste:**

| | | | |
|---|---|---|---|
| 10 | Zigarettengruppe | 24 | Spiegel |
| 10a | Zigarettengruppe | | |
| 10b | Zigarettengruppe | | |
| 11 | Zigaretten | | |
| 12a | obere Lage | | |
| 12b | mittlere Lage | | |
| 12c | untere Lage | | |
| 13a | Stirnseite | | |
| 13b | Stirnseite | | |
| 14 | Filterende | | |
| 15 | Tabakende | | |
| 16 | Prüfstation | | |
| 17a | Filterseite | | |
| 17b | Tabakseite | | |
| 17c | Oberseite | | |
| 17d | Unterseite | | |
| 17e | Schmalseite | | |
| 17f | Schmalseite | | |
| 18 | Förderer | | |
| 20 | Prüfvorrichtung | | |
| 21 | Prüforgan | | |
| 22 | Bildleiteinrichtung | | |
| 23a | Spiegel | | |
| 23b | Spiegel | | |
| 23c | Spiegel | | |
| 23d | Spiegel | | |

## Patentansprüche

1. Vorrichtung zur optischen Prüfung von bei der Verpackung von Produkten zu prüfenden Objekten - Prüfobjekte - während des Verpackungsprozesses, insbesondere von Zigaretten (11) oder anderen rauchbaren Artikeln, bevorzugt als Bestandteil einer Verpackungsmaschine zur Verpackung solcher Produkte in Packungen, mit einem Bilder der Prüfobjekte aufnehmenden elektrooptischen Prüforgan (21), insbesondere einer (elektronischen) Kamera, **gekennzeichnet durch** eine Bildleiteinrichtung (22), mit der gleichzeitig Bilder oder Teilbilder von mindestens zwei, insbesondere an gegenüberliegenden Enden der Prüfobjekte (10) befindlichen unterschiedlichen Seiten (17a-17f) des jeweiligen Prüfobjekts (10) zu dem Prüforgan (21) geleitet werden, sodass dieses in einem einzigen Bildaufnahmevorgang eine die mindestens zwei Bilder bzw. Teilbilder umfassende Bildaufnahme erzeugen kann.

2. Vorrichtung gemäß Anspruch 1, **dadurch gekennzeichnet, dass** mit der Bildleiteinrichtung (22) die Bilder/Teilbilder der mindestens zwei Prüfobjektseiten (17a-17f) derart zu dem elektrooptischen Prüforgan (21) geleitet werden, dass sich die Bilder/Teilbilder in der Bildaufnahme nicht überschneiden.

3. Vorrichtung gemäß einem oder mehreren der vorhergehenden Ansprüche, **dadurch gekennzeichnet, dass** die Bildleiteinrichtung (22) mindestens zwei separate erste Bildleitmittel (23a, 23b) aufweist, insbesondere Spiegel, wobei jeweils eines dieser ersten Bildleitmittel (23a, 23b) jeweils einer der mindestens zwei Prüfobjektseiten (17a-17f) zugeordnet ist, und wobei jedes dieser ersten Bildleitmittel (23a, 23b) ein Umlenkmittel ist, das die Lichtstrahlen innerhalb des jeweiligen Strahlengangs der Lichtstrahlen - ausgehend von der jeweiligen Prüfobjektseite (17a-17f) hin zu dem Prüforgan (21) - von einer ersten Richtung in eine zweite, abweichende Richtung umlenkt.

4. Vorrichtung gemäß einem oder mehreren der vorhergehenden Ansprüche, **dadurch gekennzeichnet, dass** die Bildleiteinrichtung (22) mindestens ein zweites Bildleitmittel (24) aufweist, insbesondere einen Spiegel, das aus unterschiedlichen Raumrichtungen stammende Lichtstrahlen des jeweiligen Bildes/Teilbildes in eine gemeinsame Raumrichtung weiterleitet, und zwar in Richtung des Prüforgans (21).

5. Vorrichtung gemäß Anspruch 3 und 4, **dadurch gekennzeichnet, dass** die mindestens zwei ersten Bildleitmittel (23a, 23b) jeweils dem die Strahlen der Bilder/Teilbilder in die gemeinsame Raumrichtung weiterleitenden, mindestens einen zweiten Bildleitmittel (24) innerhalb des jeweiligen Strahlengangs der Lichtstrahlen - ausgehend von der jeweiligen Prüfobjektseite (17a-17f) hin zu dem Prüforgan (21) - vorgeordnet sind.

6. Vorrichtung gemäß einem oder mehreren der vorhergehenden Ansprüche, **dadurch gekennzeichnet, dass** die Bildleiteinrichtung (22) eine Spiegelanordnung mit mehreren Spiegeln (23a-23d, 24) umfasst, mit denen die Lichtstrahlen der Bilder/Teilbilder der mindestens zwei Prüfprojektseiten (17a-17f) entlang eines jeweiligen Strahlengangs, der sich von der jeweiligen Prüfobjektseite (17a-17f) bis hin zu dem Prüforgan (21) erstreckt, mehrfach umgelenkt werden bis sie das Prüforgan (21) erreichen.

7. Vorrichtung gemäß einem oder mehreren der vorhergehenden Ansprüche, **dadurch gekennzeichnet, dass** die Prüfobjekte (10) Zigarettengruppen (10) sind, dass das Prüforgan (21) im Bereich einer Förderstrecke eines die Zigarettengruppen (10) fördernden Förderers (18) positioniert sind, und dass die Bildleiteinrichtung (22), insbesondere die Spiegelanordnung mit mehreren Spiegeln, gleichzeitig Bilder/Teilbilder mindestens von zwei, bevorzugt von mindestens vier Seiten der Zigarettengruppe (10), insbesondere von der Filterseite (17a), der Tabakseite (17b), der Oberseite (17c), und/oder der Unterseite (17d) der Zigarettengruppe (10), zu dem Prüforgan (21) leitet.

8. Vorrichtung gemäß Anspruch 7, **dadurch gekennzeichnet, dass** die Vorrichtung ein Beleuchtungsorgan umfasst, das das zu prüfende Prüfobjekt (10) beleuchtet, wobei zwischen dem Beleuchtungsorgan und dem zu prüfenden Prüfobjekt (10) ein halbdurchlässiger Spiegel der Spiegelanordnung der Bildleiteinrichtung (22) angeordnet ist, durch den hindurch das Licht des Beleuchtungsorgans auf das Prüfobjekt (10) fällt.

9. Verfahren zur optischen Prüfung von bei der Verpackung von Produkten zu prüfenden Objekten - Prüfobjekte - während des Verpackungsprozesses, insbesondere von Zigaretten (11) oder anderen rauchbaren Artikeln, bevorzugt zum Betreiben einer Vorrichtung gemäß einem oder mehreren der vorhergehenden Ansprüche 1-8, bei dem mit einem elektrooptischen Prüforgan (21), insbesondere einer Kamera, Bilder einzelner Prüfobjekte (10) aufgenommen werden, **dadurch gekennzeichnet, dass** mit einer Bildleiteinrichtung (22) gleichzeitig Bilder oder Teilbilder von mindestens zwei, insbesondere an gegenüberliegenden Enden der Prüfobjekte (10) befindlichen unterschiedlichen Seiten (17a-17f) des jeweiligen Prüfobjekts (10) zu dem Prüforgan (21) geleitet werden, und dass das Prüforgan (21) in einem einzigen Bildaufnahmevorgang eine die mindestens zwei Bilder bzw. Teilbilder umfassende Bildaufnahme erzeugt.

10. Verfahren gemäß Anspruch 9, **dadurch gekennzeichnet, dass** die Prüfobjekte (10) Zigarettengruppen (10) sind, die mittels eines Förderers (18) entlang einer Förderstrecke in eine Prüfposition gefördert werden, in der das Prüforgan (21) die Bildaufnahme erzeugt.

11. Verfahren gemäß Anspruch 10, **dadurch gekennzeichnet, dass** die Bildleiteinrichtung (22), insbesondere eine Spiegelanordnung mit mehreren Spiegeln, gleichzeitig Bilder/Teilbilder mindestens von zwei, bevorzugt von mindestens vier Seiten der Zigarettengruppe, insbesondere von der Filterseite (17a), der Tabakseite (17b), der Oberseite (17c), und/oder der Unterseite (17d) der Zigarettengruppe, zu dem Prüforgan leitet, und dass das Prüforgan (21) eine Bildaufnahme erzeugt, in der die Bilder/Teilbilder dieser mindestens zwei Zigarettengruppenseiten (17a-17f) enthalten sind.

12. Verfahren gemäß Anspruch 9, 10 oder 11, **dadurch gekennzeichnet, dass** die Bildaufnahme automatisch auf Fehler der in dieser enthaltenen Prüfobjektseiten (17a-17f) des Prüfobjekts (10) untersucht wird, insbesondere mittels geeigneter Bildauswerteverfahren.
